# EUROPÄISCHE PATENTSCHRIFT

(11) **EP 0 671 824 B1**
(45) Veröffentlichungstag und Bekanntmachung des Hinweises auf die Patenterteilung: **19.05.2004**
(21) Anmeldenummer: 95102973.5
(22) Anmeldetag: 02.03.1995
(51) Int. Cl.: H04B 7/26

(54) **Verfahren und Anordnung zur Übertragen von block kodierten Informationen über mehrere Kanäle in einem digitalen mobilen Funksystem**
Method and device for transmission of block coded information on more than one channel in a digital mobile radio system
Procédé et dispositif de transmission d'informations codées par block sur plusieurs canaux dans un système radio numérique mobile

(30) Priorität: 07.03.1994 DE 4407530
(43) Veröffentlichungstag der Anmeldung: 13.09.1995
(73) Patentinhaber: SIEMENS AKTIENGESELLSCHAFT, 80333 München (DE)
(72) Erfinder: Schulz, Egon, Dr. Dipl.-Phys., D-80993 München (DE)

(56) Entgegenhaltungen:
- EP-A- 0 538 546
- EP-A- 0 605 312
- WO-A-92/06546
- WO-A-92/12481
- US-A- 5 289 471
- IBM DISCLOSURE BULLETIN, Bd.24, Nr.11B, April 1982, NEW-YORK,US; Seiten 5805 - 5808 D.F.BANTZ 'Continuation packet protocol'
- IEEE TRANSACTIONS ON VEHICULAR TECHNOLOGY, Bd.40, Nr.2, 1991, NEW-YORK,US; Seiten 392 - 404, XP234902 G.D'ARIA ET AL. 'Fast Adaptive Equalizers for Narrow-Band TDMA Mobile Radio'

## Beschreibung

Die Erfindung bezieht sich auf ein Verfahren und Anordnung zum Übertragen von Informationen in einem digitalen Funksystem. Weiterhin bezieht sich die Erfindung auf eine Zentralstation und eine Teilnehmerstation eines digitalen Funknetzes.

Ein Beispiel für ein digitales Funksystem ist das digitale zellulare pan-europäische Mobilfunksystem GSM (Global System for Mobile Communication). Bei diesem System wird das Vielfachzugriffsverfahren TDMA (Time Division Multiple Access) benutzt, wobei die Mobilfunkteilnehmer durch unterschiedliche Zeitschlitze eines Zeitmultiplexsystems unterschieden werden. Das GSM ist für den 900 MHz-Bereich (GSM 900) und für den 1800 MHz-Bereich (DCS 1800) standardisiert. Im GSM 900 empfangen die Basisstationen und senden die Mobilstationen (MS) in dem als Unterband bezeichneten Frequenzband von 890 bis 915 MHz und in dem als Oberband bezeichneten Frequenzband von 935 bis 960 MHz senden die Basisstationen und empfangen die Mobilstationen. Weiterhin kann man im GSM 900 auch in einem zusätzlich spezifizierten Frequenzband G1 operieren, wobei im Oberband von 880 bis 890 MHz die Mobilstationen senden und die Basisstationen empfangen und im Unterband von 925 bis 935 MHz die Basisstationen senden und die Mobilstationen empfangen.

WO-A-9212481 reprasentiert ein digitales Funksystem aus dem Stand der Technik.

Für das DCS 1800 System ist ein Oberband von 1710 bis 1785 MHz vorgesehen, in dem die Mobilstationen senden und die Basisstationen empfangen und es ist ein Unterband von 1805 bis 1880 MHz vorgesehen, in dem die Basisstationen senden und die Mobilstationen empfangen.

Die Frequenzbandbreite eines Trägers (Carrier, Frequenz) im GSM beträgt 200 kHz und jeder Träger mit der Bandbreite von 200 kHz ist in acht Zeitschlitze (Time Slots) aufgeteilt. Das GSM ist somit eine Kombination aus den Vielzugriffsverfahren Frequency Division Multiple Access (FDMA) und Time Division Multiple Access (TDMA). Man spricht in diesem Falle von einem FDMA/TDMA-System.

Jedem Mobilfunkteilnehmer im GSM wird für die Übertragung von Daten oder digitalisierter Sprache ein Datenkanal oder ein Sprachdatenkanal zugewiesen, wobei ein Datenkanal oder ein Sprachdatenkanal einem Zeitschlitz eines Trägers zugeordnet ist. Um den Datenstrom vor Störungen auf dem Funkkanal zu schützen wird ein Vorwärts-Korrekturverfahren (Forward Error Correction, FEC) durchgeführt. Dabei wird mit Hilfe einer Kanalcodierung der zu übertragenden Information (Daten oder digitalisierte Sprache) Redundanz hinzugefügt. Die hinzugefügte Redundanz dient der Erkennung und Korrektur von Fehlern. Die maximale Brutto-Übertragungsrate eines Zeitschlitzes, welche sich aus der zu übertragenden Information und der hinzugefügten Redundanz zusammensetzt, beträgt maximal 22,8 kbit/s.

Im GSM wird die digitalisierte Sprache mit einer Netto-Übertragungsrate von 13 kbit/s übertragen. Für die Fehlersicherung der digitalisierten Sprache wird mit Hilfe der Kanalcodierung 9,8 kbit/s Redundanz hinzugefügt. Neben den Sprachkanälen gibt es im GSM Kanäle mit unterschiedlichen Nutzdatenraten, wobei aber die maximale Brutto-Übertragungsrate, wie schon erwähnt, 22,8 kbit/s beträgt. Den im GSM.existierenden Kanälen mit den Nutzdatenraten 12,0 kbit/s, 6,0 kbit/s bzw. 3,6 kbit/s wird durch die Kanalcodierung eine Redundanz von 10,8 kbit/s, 16,8 kbit/s bzw. 19,2 kbit/s hinzugefügt, so daß sich immer eine Brutto-Übertragungsrate von 22,8 kbit/s ergibt.

Ein Nachteil dieses Systems liegt darin, daß man einem Funkteilnehmer im GSM hinsichtlich der Übertragung nur eine maximale fehlererkennende und fehlerkorrigierende Übertragungsrate von 12,0 kbit/s zuweisen kann. Würde man die Redundanz fortlassen, so könnte man im GSM eine maximale redundanzfreie Übertragungsrate von 22,8 kbit/s erzielen. Der Nachteil bei der Fortlassung der Redundanz besteht jedoch darin, daß man bei der Übertragung auftretende Störungen, welche in Bitfehler resultieren, nicht erkennen und/oder korrigieren kann.

Der Erfindung liegt die Aufgabe zugrunde, in einem Funksystem eine größere Übertragungsrate als die in einem Kanal maximal zugelassene Übertragungsrate zu ermöglichen.

Erfindungsgemäß wird die Aufgabe bei dem Verfahren der eingangs genannten Art durch die im kennzeichnenden Teil des Patentanspruchs 1 angegebenen Merkmale gelöst. Eine Anordnung gemäß der Erfindung ist im Patentanspruch 16 angegeben. Eine entsprechende Mobilstation ist in Anspruch 17 angegeben.

Erfindungsgemäß wird nicht nur ein Kanal des Funksystems für eine Übertragung vorgesehen, sondern bei Anforderung einer höheren Übertragungsrate werden zwei oder mehrere Kanäle, beispielsweise Zeitschlitze eines Zeitschlitzrahmens, welche nicht notwendigerweise auf ein und derselben Frequenz liegen müssen, zu einem Multi-Kanal zusammengefaßt und diese Kanäle werden als Multi-Kanal dem Funkteilnehmer zugewiesen.

Bei der Verwendung eines Funksystems, das als Zeitmultiplexsystem ausgebildet ist, bleibt für die Übertragung die Struktur des Zeitschlitzrahmens (TDMA Frame) und der Zeitschlitze (Time Slot) erhalten. Einerseits kann man auf bestehende Kanäle zurückgreifen, wobei der Multi-Kanal aus den bereits in einem System definierten Kanälen (zum Beispiel im GSM sind es der 12 kbit/s, 6 kbit/s und 3,6 kbit/s Kanal) gebildet wird. Andererseits werden für die Übertragung auf einem aus mehreren Zeitschlitzen bestehenden Multi-Kanal vom System bereits definierte Kanalcodierschemata und Verschachtelungsschemata und neue Schemata benutzt.

Besteht die Möglichkeit, z.B. bei einem bekannten Mobilfunksystem einem Mobilfunkteilnehmer nicht nur einen Zeitschlitz sondern zwei oder mehrere Zeitschlitze, d.h. einen als Multi-Kanal dienenden Multi-Zeitschlitz eines Zeitschlitzrahmens eines oder mehreren Trägern zuzuordnen, so läßt sich damit eine höhere fehlererkennende oder fehlerkorrigierende Übertragungsrate oder redundanzfreie Übertragungsrate als im GSM übertragen.

Ordnet man einem Mobilfunkteilnehmer einen Multi-Zeitschlitz, bestehend aus zwei Zeitschlitzen eines Zeitschlitzrahmens eines oder mehrerer Träger zu, so kann die doppelte maximale Bruttodatenrate von 22,8 kbit/s übertragen werden. Es ergibt sich dann eine maximale redundanzfreie Brutto-Übertragungsrate von 45,8 kbit/s. Wird jedem Zeitschlitz des aus zwei Zeitschlitzen bestehenden Multi-Zeitschlitzes ein bereits im GSM existierender 12,0 kbit/s Kanal zugeordnet, so können über die beiden Zeitschlitze insgesamt 24,0 kbit/s fehlergesichert übertragen werden. Ein Multi-Kanal wird somit aus einem Multi-Zeitschlitz gebildet, der aus mehreren Zeitschlitzen eines Zeitschlitzrahmens eines oder mehrerer Träger besteht, auf dem die Informationen übertragen werden. Als Informationen können beispielsweise komprimierte Vidoesignale übertragen werden, die über einen einzigen Kanal nicht überragen werden könnten.

Besteht der Multi-Kanal aus drei Zeitschlitzen eines Zeitschlitzrahmens, so steht dem Mobilfunkteilnehmer eine maximale redundanzfreie Bruttodatenrate von 68,4 kbit/s zur Verfügung. Über einen aus drei Zeitschlitzen gebildeten Multi-Kanal hat man die Möglichkeit 64,0 Kbit/s fehlergesichert zu übertragen, wobei 4,4 kbit/s für fehlererkennende oder fehlerkorrigierende Redundanz verwendet werden kann. Andererseits kann man auch 36,0 kbit/s fehlergesichert übertragen, wenn jedem Zeitschlitz ein 12,0 kbit/s Kanal zugeordnet ist. Es besteht natürlich auch die Möglichkeit den drei Zeitschlitzen eine Kombination von bereits im GSM existierenden Kanälen zuzuordnen. Eine gemischte Kombination besteht z.B. darin, zwei Zeitschlitzen einen 12 kbit/s- und einem Zeitschlitz einen 6 kbit/s-Kanal zuzuweisen. Damit resultiert für den aus drei Zeitschlitzen gebildeten Multi-Kanal eine fehlergesicherte Übertragungsrate von insgesamt 30 kbit/s.

Besteht der Multi-Kanal aus vier Zeitschlitzen eines Zeitschlitzrahmens, so steht dem Funkteilnehmer eine redundanzfreie maximale Brutto-Datenrate von 91,6 kbit/s zur Verfügung. Möchte man z.B. über einen aus vier Zeitschlitzen gebildeten Multi-Kanal eine Netto-Datenrate von 64,0 kbit/s übertragen, so bleiben 27,6 kbit/s für die Hinzufügung von fehlererkennender oder fehlerkorrigierender Redundanz übrig.

Der Vorteil bei der Benutzung bereits existierender Kanäle bei der Bildung eines Multi-Kanals besteht darin, daß man auf bereits existierende Strukturen und Definitionen zurückgreifen kann und dadurch Entwicklungskosten sparen kann.

Ausführungsbeispiele der Erfindung werden im folgenden anhand von Zeichnungen näher erläutert. Es zeigen:
- Fig. 1: ein Blockbild eines bekannten Mobilfunksystems,
- Fig.: 2 die Struktur eines Zeitschlitzrahmens,
- Fig. 3: einen aus 26 Zeitschlitzrahmen gebildeten Rahmen,
- Fig. 4: die Codierung eines Kanals mit einer Übertragungsrate von 12,0 kbit/s,
- Fig. 5: die Codierung eines Kanals mit einer Übertragungsrate von 3,6 kbit/s,
- Fig. 6: einen aus zwei Zeitschlitzen auf unterschiedlichen Frequenzen gebildeten Multi-Kanal,
- Fig. 7: die Codierung eines Kanals mit einer Übertragungsrate von 24,0 kbit/s,
- Fig. 8: eine Übertragungsanordnung für die Übertragung eines Multi-Kanals mit einer Übertragungsrate von 24,0 kbit/s,
- Fig. 9: einen aus zwei Zeitschlitzen auf der selben Frequenz gebildeten Multi-Kanal,
- Fig. 10: die weitere Codierung eines Kanals mit einer Übertragungsrate von 24,0 kbit/s,
- Fig. 11: eine Übertragungsanordnung für die Übertragung eines Multi-Kanals mit einer Übertragungsrate von 24,0 kbit/s, wobei eine gemeinsame Kanalcodierung vorgesehen ist.
- Fig. 12: einen aus vier zeitschlitzen auf vier unterschiedlichen Frequenzen gebildeten Multi-Kanal für eine Übertragungsrate von 48,0 kbit/s,
- Fig. 13: einen aus vier Zeitschlitzen auf drei unterschiedlichen Frequenzen gebildeten Multi-Kanal für eine Übertragungsrate von 48,0 kbit/s,
- Fig. 14: einen aus vier Zeitschlitzen auf zwei unterschiedlichen Frequenzen gebildeten Multi-Kanal für eine Übertragungsrate von 48,0 kbit/s,
- Fig. 15: einen aus vier Zeitschlitzen auf einer Frequenz gebildeten Multi-Kanal für eine Übertragungsrate von 48,0 kbit/s,
- Fig. 16: die Codierung eines Kanals mit einer Übertragungsrate von 48,0 kbit/s,
- Fig. 17: die Codierung eines Kanals mit einer Übertragungsrate von 64,0 kbit/s,
- Fig. 18: einen aus sechs Zeitschlitzen auf vier Frequenzen gebildeten Multi-Kanal für eine Übertragungsrate von 64,0 kbit/s,
- Fig. 19: eine Übertragungsanordnung für einen Multi-Kanal für eine Übertragung mit einer Übertragungsrate von 64,0 kbit/s,
- Fig. 20: eine weitere Codierung eines Kanals mit einer Übertragungsrate von 64,0 kbit/s,
- Fig. 21: einen aus sechs Zeitschlitzen auf sechs Frequenzen gebildeten Multi-Kanal für eine Übertragungsrate von 64,0 k/bit/s,
- Fig. 22: eine weitere Übertragungsanordnung für einen Multi-Kanal für eine Übertragung mit einer Übertragungsrate von 64,0 kbit/s,
- Fig. 23: eine Codierung unter Verwendung eines Frequenzsprungverfahrens,
- Fig. 24: eine Codierung für einen aus sechs Zeitschlitzen eines Zeitschlitzrahmens gebildeten Multi-Kanal, der über acht Frequenzen springen kann,
- Fig. 25: eine weitere Codierung eines Kanals mit einer Übertragungsrate von 64,0 kbit/s,
- Fig. 26: eine weitere Übertragungsanordnung für einen Multi-Kanal für eine Übertragung mit einer Übertragungsrate von 64,0 kbit/s,
- Fig. 27: eine noch weitere Codierung eines Kanals mit einer Übertragungsrate von 64,0 kbit/s,
- Fig. 28: einen aus drei Zeitschlitzen auf drei Frequenzen gebildeten Multi-Kanal für eine Übertragungsrate von 64,0 kbit/s,
- Fig. 29: eine noch weitere Übertragungsanordnung für einen Multi-Kanal für eine Übertragung mit einer Übertragungsrate von 64,0 kbit/s,
- Fig. 30: eine weitere Codierung eines Kanals mit einer Übertragungsrate von 64,0 kbit/s,
- Fig. 31: eine schematische Darstellung einer weiteren Übertragungsanordnung für einen Multi-Kanal für eine Übertragung mit einer Übertragungsrate von 64,0 kbit/s,
- Fig. 32: eine weitere Codierung eines Kanals mit einer Übertragungsrate von 64,0 kbit/s,
- Fig. 33: eine schematische Darstellung einer weiteren Übertragungsanordnung für einen Multi-Kanal für eine Übertragung mit einer Übertragungsrate von 64,0 kbit/s,
- Fig. 34: eine Codierung eines Kanals mit einer Übertragungsrate von 64,0 kbit/s ohne zusätzliche Füllbits bzw. Redundanzbits,
- Fig. 35: eine Aufteilung von 16 Kanälen auf acht Frequenzen,
- Fig. 36: eine Übertragungsanordnung für eine Übertragung mit 64 kbit/s.

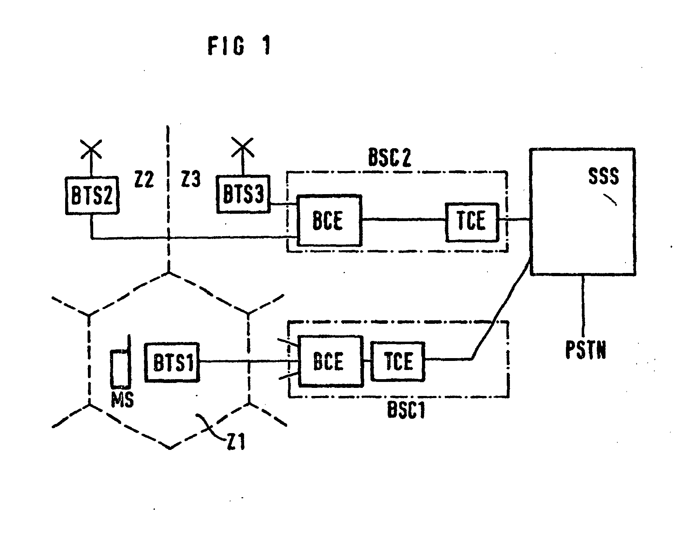

Bei dem in Fig. 1 dargestellten Funksystem ist ein Funkbereich eines entsprechend dem sog. GSM-Standard (GSM = Global System for Mobile Communication) arbeitenden Mobilfunksystems in mehrere Zellen Z aufgeteilt, von denen in Fig. 1 nur die Zellen Z1 bis Z3 bezeichnet sind. In einer derartigen Zelle Z wird der Telekommunikationsdienst von und zu einer Mobilstation MS durch eine Basisstation BTS bereitgestellt (BTS = Base Transceiver Station). In der Fig. 1 sind lediglich die den Zellen Z1 bis Z3 zugeordneten Basisstationen BTS1 bis BTS3 dargestellt. Eine oder mehrere Basisstationen BTS sind mit einer Basis-Steuereinheit BSC (BSC = Base Station Controller) verbunden, von denen in Fig. 1 nur die Basis-Steuereinheiten BSC1 und BSC2 dargestellt sind. Die Steuereinheiten BSC führen die lokalen Funktionen der Rufvermittlung, Überwachung und Wartung durch. Sie umfassen Steuereinheiten BCE (Base Station Control Equipment) und Codeumsetzer TCE (Transcoding Equipment). Mehrere Basis-Steuereinheiten BSC sind mit einer Vermittlungseinrichtung SSS (SSS = Switching Subsystem) verbunden, die ihrerseits mit dem öffentlichen Netz PSTN (PSTN = Public Switched Telefone Network) verbunden ist, das als ISDN-Netz, als Mobilfunknetz oder als sonstiges Telefon- oder Datennetz ausgebildet sein kann. Ein derartiges System ist beispielsweise in einer Druckschrift der Siemens AG, D900 Mobile Communication System, System Description, 1992 beschrieben.

Falls ein Teilnehmer mit der als Teilnehmerstation dienenden Mobilstation MS in der Zelle Z1 mit einem anderen Teilnehmer kommunizieren will, so wird über die Basisstation BTS1 mit der Basis-Steuereinheit BSC1 ein vorgegebenes Protokoll abgewickelt, das beispielsweise in dem obengenannten GSM-Standard festgelegt ist. Wenn die Verbindung zwischen der Mobilstation MS und der Basis-Steuereinheit BSC1 hergestellt ist, wird über die Vermittlungseinrichtung SSS eine Verbindung zum öffentlichen Netz PSTN hergestellt. Von diesem aus wird dann der andere Teilnehmer, der wiederum mit einer Mobilstation versehen sein kann, erreicht.

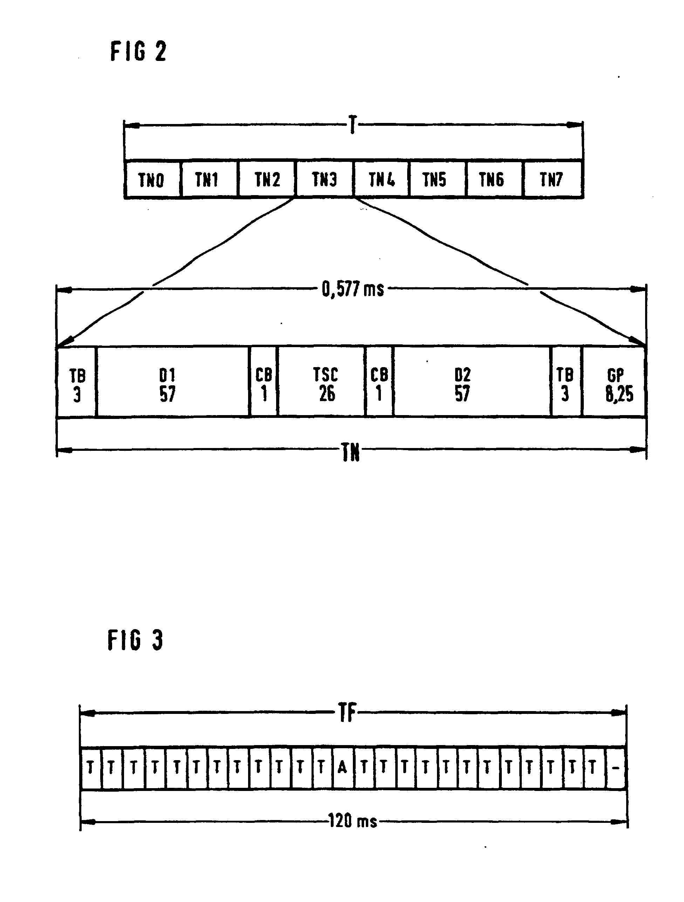

In Fig. 2 ist die Struktur eines Zeitschlitzrahmens T mit acht Zeitschlitzen TN0 bis TN7 dargestellt, wobei ein Zeitschlitzrahmen (TDMA Frame) eine Dauer von 4,615 ms besitzt. Jeder Zeitschlitz hat eine Dauer von ca. 0,577 ms bzw. 156,25 Bits. Den physikalischen Inhalt eines Zeitschlitzes bezeichnet man als Burst. Vier verschiedene Bursttypen existieren in diesem System:
1. Normalburst (Normal Burst): Dieser Burst wird benutzt, um Daten, Sprach- oder Kontrollinformationen zu übertragen.
2. Frequenzkorrekturburst (Frequency Correction Burst): Dieser Burst wird für die Frequenzsynschronisation der Mobilstation benutzt.
3. Synchronisationsburst (Synchronization Burst): Dieser Burst wird für die Rahmensynschronisation der Mobilstation benutzt.
4. Zugriffsburst (Access Burst): Dieser Burst wird für den Erstzugriff der Mobilstation und bei einem Weiterreichen (Handover) der Mobilstation benutzt.

In Fig. 2 ist ein Normalburst TN mit einer Dauer von 0,577 ms vergrößert dargestellt. Er enthält 114 verschlüsselte oder nicht verschlüsselte Informationsbits, je nachdem, ob eine Verschlüsselungsfunktion ein- oder ausgeschaltet ist. Diese Bursts sind in zwei Halbburst D1 und D2 mit jeweils 57 Bits aufgeteilt. In der Mitte des Normalbursts befindet sich eine 26 Bit lange Einstellfolge (Training Sequence) TSC, die dazu dient, den Kanal auszumessen und/oder die Kanalimpulsantwort des Übertragungskanals zu schätzen. Zu beiden Seiten der Einstellfolge TSC befindet sich jeweils ein Steuerbit CB, welches anzeigt, ob der Normalburst Daten oder'Kontrollinformationen enthält. Wenn das linke Kontrollbit gesetzt ist, dann enthalten die ungeraden Informationsbits Kontrollinformationen und die geraden Informationsbits enthalten Daten. Ist das rechte Kontrollbit gesetzt ist, so enthalten die geraden Informationsbits Kontrollinformationen und die ungeraden Bits enthalten Daten. Sind dagegen beide Kontrollbits gesetzt, so enthält der Normalburst nur Kontrollinformationen. Ein Normalburst beginnt und endet jeweils mit drei definierten Zusatzbits (Tail Bits) TB. Ein Normalburst schließt mit einer Schutzzeit (Guard Period) GP von 8,25 Bits ab.

Die Verkehrsdatenkanäle im GSM sind in einem Rahmen TF, bestehend aus 26 Zeitschlitzrahmen (26-frame-multiframe), angeordnet, wie er in Fig. 3 dargestellt ist. In zwölf aufeinanderfolgenden Zeitschlitzrahmen T, nämlich den Zeitschlitzrahmen 0 bis 11 und Zeitschlitzrahmen 13 bis 24 werden Daten, digitalisierte Sprache oder Kontrollinformationen gesendet. Der Zeitschlitzrahmen 12 dient zur Übertragung von Steuerinformationen A, wie z.B. Parameter für die adaptive Leistungsregelung des entsprechenden Mobilfunkteilnehmers, Frequenzen der Nachbarzellen, usw. und zellspezifischen Informationen. Im Zeitschlitzrahmen 25 werden keine Daten übertragen. Der in Fig. 3 dargestellte Rahmen entspricht einer Dauer von 120 ms.

In 24 der 26 Zeitschlitzrahmen T kann somit Nutzinformation übertragen werden. Da in jedem Zeitschlitz TN 114 Bits (Normalburst) übertragen werden können, werden also während eines 120 ms langen Rahmens 114.24 = 2736 Informationsbits übertragen. Dies entspricht einer Bruttodatenrate von 22,8 kbit/s.

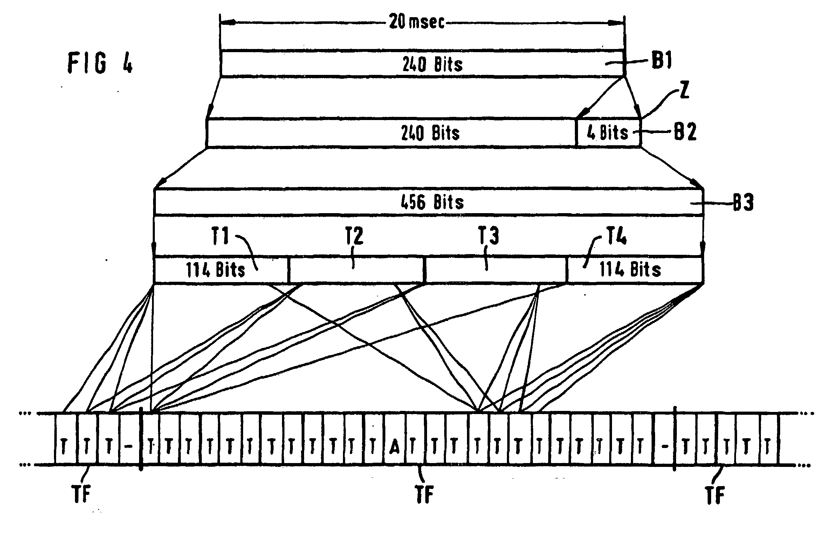

Bei der in Fig. 4 dargestellten Kanalcodierung und Verschachtelung eines Kanals mit einer Übertragungsrate von 12,0 kbit/s werden Blöcke B1 von 240 Bits gebildet, die einer Dauer von jeweils 20 ms entsprechen. Jeder Block B1 wird durch vier definierte Zusatzbits Z zu einem Block B2 erweitert und anschließend kanalcodiert. Die Kanalcodierung wird mittels eines Faltungscodes mit der Informationsrate R=1/2 und mit der Gedächtnislänge K=4 durchgeführt. Dadurch ergeben sich insgesamt 488 Bits. Nach der Kanalcodierung werden aus dem kanalcodierten Block 32 Bits gestrichen, welche nicht übertragen werden. Somit resultiert ein zu übertragender Block B3 mit 456 Bits. Diese 456 Bits werden umgeordnet und in vier Teilblöcke T1 bis T4 von jeweils 114 Bits zerlegt. Dann wird jeder Teilblock T1 bis T4 in 19 Datenblöcke von je sechs Bits zerlegt. In jedem für die Übertragung zur Verfügung stehenden Zeitschlitz wird ein Datenblock bestehend aus sechs Bits übertragen, so daß für die Übertragung eines 114 Bit langen Teilblocks T1 bis T4 mindestens 19 Zeitschlitzrahmen T benötigt werden. Man spricht in diesem Fall von einer Verschachtelungstiefe (interleaving depth) von 19. Da die Übertragung eines 114 Bits großen Teilblocks T1 bis T4 beim 12,0 kbit/s Kanal jeweils einen Zeitschlitzrahmen T später beginnt gegenüber dem vorhergehenden, werden für die Übertragung von 456 Bits beim 12,0 kbit/s Kanal mindestens 22 Zeitschlitzrahmen T benötigt.

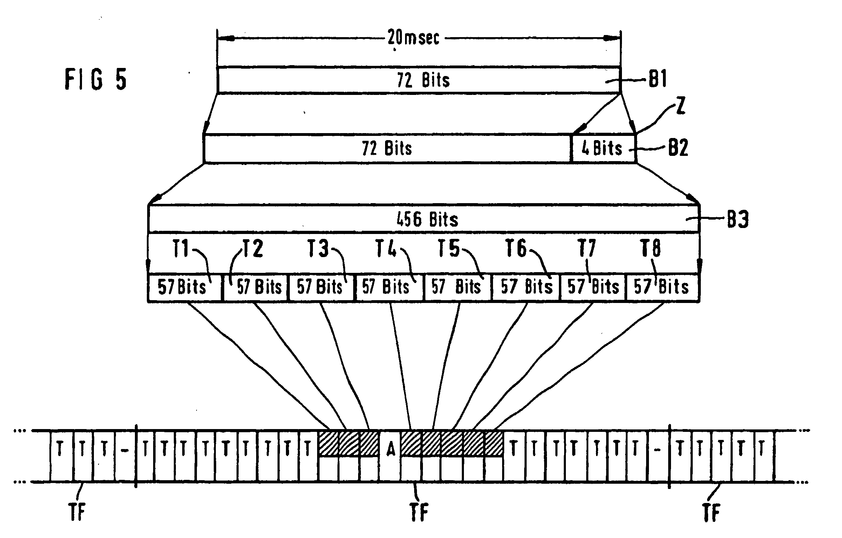

Bei der in Fig. 5 dargestellten Kanalcodierung und Verschachtelung eines Kanals mit einer Übertragungsrate von 3,6 kbit/s werden Blöcke B1 von 72 Bits gebildet, die 20 ms entsprechen. Jedem Block B1 werden vier Zusatzbits Z hinzugefügt, um einen Block B2 zu erzeugen. Dieser wird anschließend mittels eines Faltungscodes kanalcodiert. Der Faltungscode hat die Coderate R=1/2 und die Gedächtnislänge K=4. Durch die Kanalcodierung werden den 72 Bits somit 384 Bits Redundanz hinzugefügt. Der kanalcodierte Block B3 mit 456 Bits wird dann in acht Teilblöcke T1 bis T8 mit jeweils 57 Bits zerlegt und je ein Teilblock T1 bis T8 wird in einem Zeitschlitz eines Zeitschlitzrahmens T übertragen, wie es in Fig. 5 dargestellt ist.

Der 3,6 kbit/s Kanal ist wegen der hohen Redundanz im Vergleich zum 12,0 kbit/s Kanal gegen Störungen robuster. Eine höhere fehlergesicherte Übertragung (ausgenommen Sprache mit 13 kbit/s) als mit einer Nettodatenrate von 12,0 kbit/s bzw. einer Bruttodatenrate von 22,8 kbit/s ist im GSM-System nicht vorgesehen.

Eine höhere Datenübertragungsrate kann man jedoch dadurch erzielen, wenn man einem Teilnehmer zwei oder mehrere Zeitschlitze TN eines Zeitschlitzrahmens T auf derselben oder auf unterschiedlichen Frequenzen zuordnet.

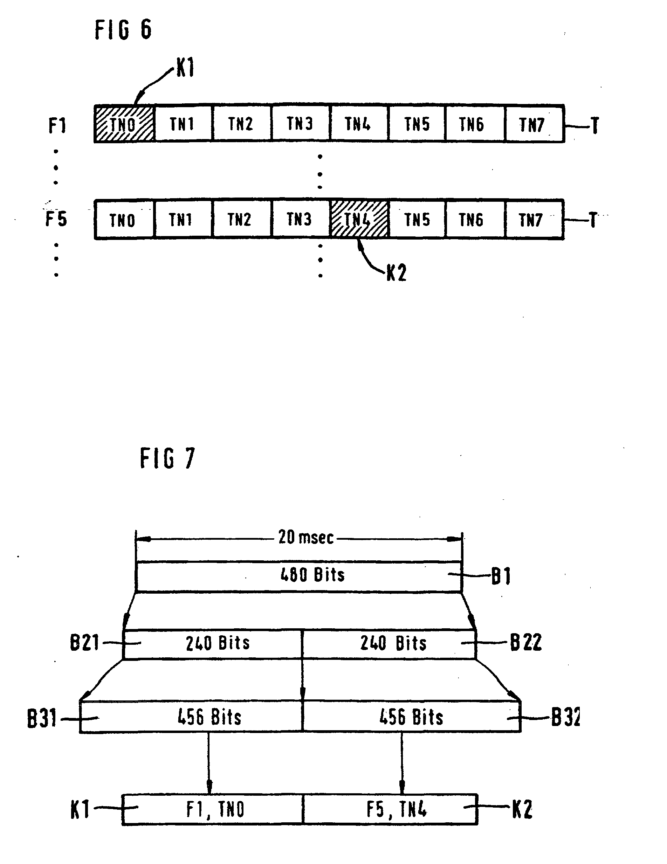

Möchte man beispielsweise einen fehlergesicherten Kanal zur Übertragung von 24,0 kbit/s haben, so ordnet man dem Teilnehmer einen Multi-Kanal, bestehend aus zwei Zeitschlitzen TN zu, wobei auf jedem Zeitschlitz TN ein fehlergesicherter Kanal mit einer Übertragungsrate von 12,0 kbit/s angeordnet ist. Dabei kann z.B. der eine 12,0 kbit/s Kanal K1 auf dem Zeitschlitz TN0 einer Frequenz F1 angeordnet sein und der andere 12,0 kbit/s Kanal K2 auf dem Zeitschlitz TN4 der Frequenz F5 des gleichen Zeitschlitzrahmens T angeordnet sein, wie es in Fig. 6 dargestellt ist.

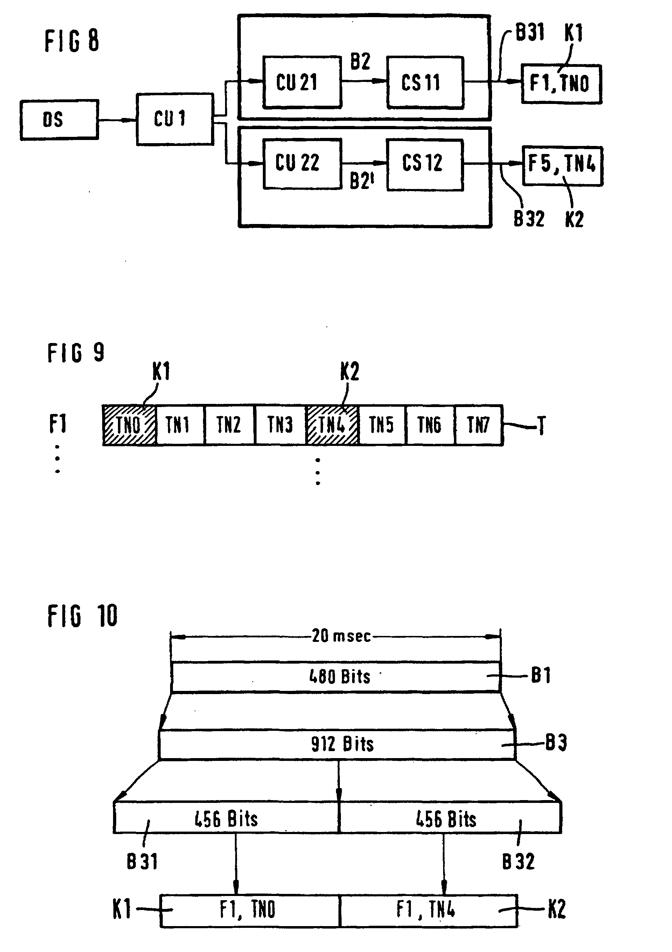

Bei der in den Fig. 7 und 8 dargestellten Übertragung mit einer Übertragungsrate von 24,0 kbit/s liefert eine Datenquelle DS alle 20 ms einen Datenstrom von 480 Bits, der mittels einer Steuereinheit CU1 in jeweils einen Block B1 geformt wird. Der Block B1 wird in jeweils einer Steuereinheit CU21 und CU22 in zwei Datenblöcke B21 und B22 mit jeweils 240 Bits zerlegt. Jeder Datenblock B21 und B22 wird dann einer Codierstufe CS11 bzw. CS12 für eine Kanalcodierung und eine Verschachtelung (Interleaving) für einen 12,0 kbit/s Kanal K1 bzw. K2 zugeführt, um Blöcke B31 und B32 zu bilden. Jeder 12,0 kbit/s Kanal K1 bzw. K2 wird dann einem Zeitschlitz TN des aus zwei Zeitschlitzen F1, TN0 bzw. F5, TN4 gebildeten Multi-Kanals zugeordnet.

In den Fig. 6 bis 8 ist beispielhaft dargestellt, daß der Kanal K1 dem Zeitschlitz TN0 auf der Frequenz F1 und der Kanal K2 den Zeitschlitz TN4 auf der Frequenz F5 zugeordnet ist.

Bei der in Fig. 9 dargestellten Konstellation sind die beiden Kanäle K1 und K2 beispielhaft auf derselben Frequenz F1 angeordnet. Der Kanal K1 belegt dort den Zeitschlitz TN0 und der Kanal K2 belegt den Zeitschlitz TN4.

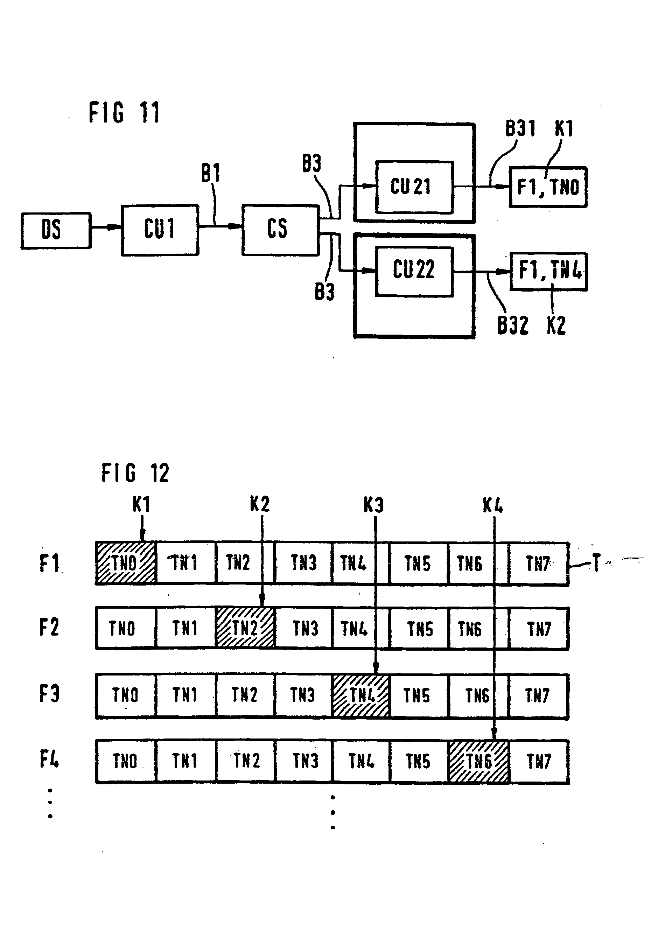

Die Fig. 10 und 11 zeigen eine andere Möglichkeit für die Übertragung von 24,0 kbit/s. Die Steuereinheit CU1 bildet jeweils aus 480 Bits, die die Datenquelle DS alle 20 ms liefert, einen Block B1. Dieser wird in der Codierstufe kanalcodiert, so daß man jeweils einen kanalcodierten Block B3 mit 912 Bits erhält. Der kanalcodierte Block B3 wird dann in den Steuereinheiten CU21 und CU22 in zwei gleich große Teilblöcke B31 und B32 zerlegt, und jeder Teilblock B31 und B32 mit 456 Bits wird einem Kanal K1 und Kanal K2 eines Multi-Kanals zuordnet, wobei jeder Teilblock B31 und B32 über mehrere Zeitschlitze verschachtelt (interleaved) wird. Die Aufteilung des aus zwei Kanälen K1 und K2 gebildeten Multi-Kanals erfolgt beispielsweise ebenfalls entsprechend der Darstellung in Fig. 9.

Wie es in den Fig. 12 bis 15 dargestellt ist, kann man für eine fehlergesicherte Übertragung von 48,0 kbit/s, unter Ausnutzung der zur Verfügung stehenden fehlergesicherten 12,0 kbit/s Kanäle Multi-Kanäle bilden, die aus vier Kanälen (Zeitschlitzen) K1 bis K4 eines Zeitschlitzrahmens bestehen. Dabei können unterschiedliche Konstellationen verwendet werden, wie sie beispielhaft in den Fig. 12 bis 15 gezeigt sind.

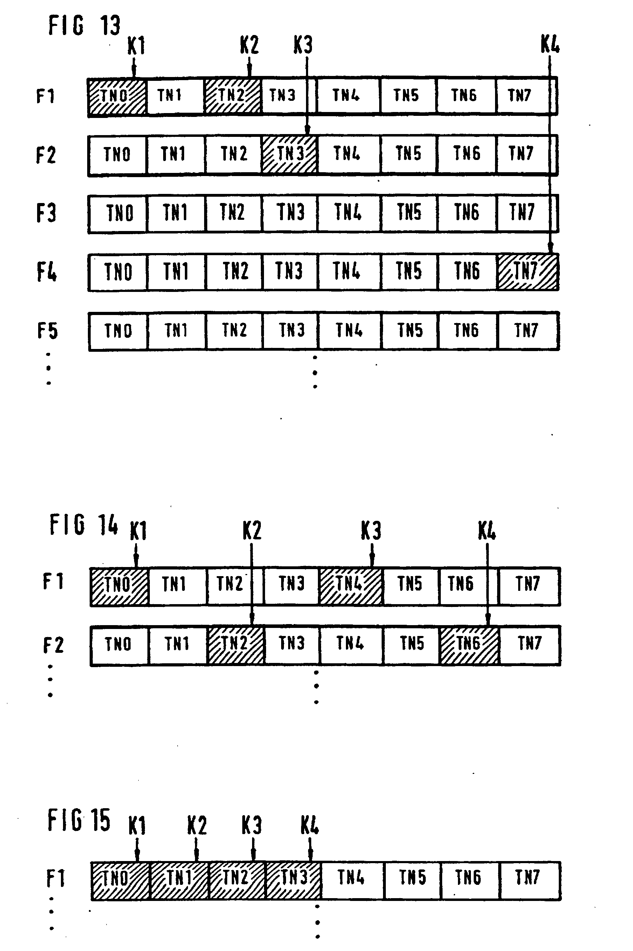

In der Fig. 12 sind beispielsweise die vier Kanäle K1 bis K4 gleichmäßig auf vier Frequenzen F1 bis F4 von Zeitschlitzrahmen T verteilt. In Fig. 13 sind die vier Kanäle K1 bis K4 auf drei Frequenzen F1, F2 und F5 von Zeitschlitzrahmen T verteilt und in Fig. 14 sind die vier Kanäle K1 bis K4 auf zwei Frequenzen F1 und F2 verteilt. In Fig. 15 sind die vier Kanäle K1 bis K4 nur auf einer Frequenz F1 angeordnet.

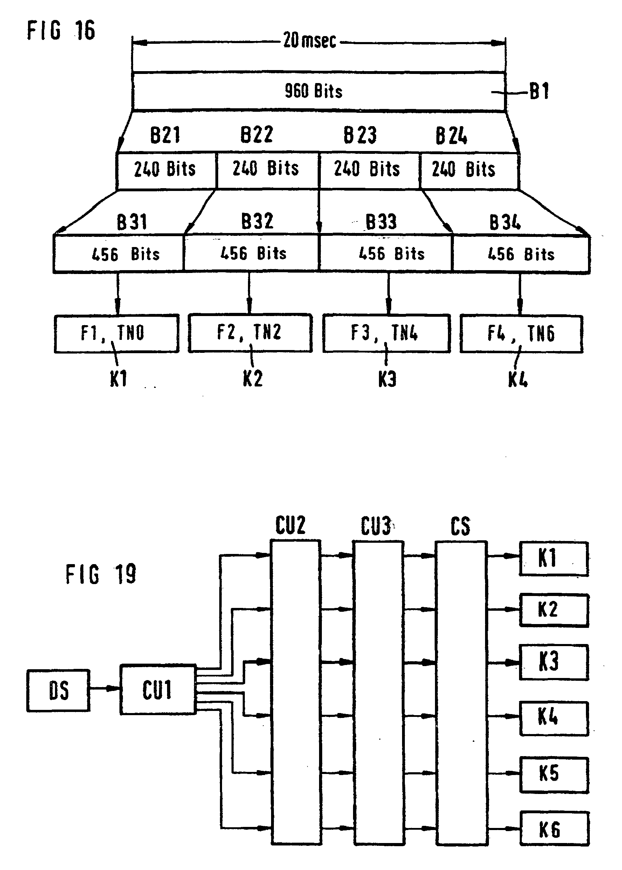

Bei der in Fig. 16 dargestellten Codierung für eine Übertragungsrate von 48,0 kbit/s liefert die Datenquelle DS alle 20 ms einen Datenstrom von 960 Bits. Dieser Datenblock kann, in vier Teilblöcke B21 bis B24 mit jeweils 240 Bits zerlegt werden. Jeder Teilblock B21 bis B24 wird einer Übertragungseinrichtung für einen 12,0 kbit/s Kanal zugeführt und es entstehen die kanalcodierten Blöcke B31 bis B34 mit jeweils 456 Bits. Anschließend wird jeder 12,0 kbit/s Kanal K1 bis K4 einem Zeitschlitz des aus vier Kanälen K1 bis K4 gebildeten Multi-Kanals zugeordnet. In den Fig. 12 bis 15 sind beispielhaft jeweils Zeitschlitze der dazugehörigen Multi-Kanäle dargestellt. Die Fig. 16 zeigt die Zuordnung der Kanäle für die in Fig. 12 dargestellte Aufteilung. Entsprechendes gilt für die Aufteilungen gemäß den Fig. 13 bis 15.

Die nachfolgende Tabelle gibt an, welche fehlergesicherten und nicht fehlergesicherten Übertragungsraten möglich sind bei der Bildung von Multi-Zeitschlitzen und bei Ausnutzung der im System schon vorhandenen Kanälen für 12,0 kbit/s, 6,0 kbit/s und 3,6 kbit/s. Für den nicht fehlergesicherten Fall hat ein Zeitschlitz eine maximale Bruttodatenrate von 22,8 kbit/s.

| Anzahl der Zeitschlitze | 12,0 kbit/s | 6,0 kbit/s | 3,6 kbit/s | 22,8 kbit/s |
|---|---|---|---|---|
| 1 | 12,0 kbit/s | 6,0 kbit/s | 3,6 kbit/s | 45,6 kbit/s |
| 2 | 24,0 kbit/s | 12,0 kbit/s | 7,2 kbit/s | 68,4 kbit/s |
| 3 | 36,0 kbit/s | 18,0 kbit/s | 10,8 kbit/s | 91,2 kbit/s |
| 4 | 48,0 kbit/s | 24,0 kbit/s | 14,0 kbit/s | 114,0 kbit/s |
| 5 | 60,0 kbit/s | 30,0 kbit/s | 17,2 kbit/s | 136,8 kbit/s |
| 6 | 72,0 kbit/s | 36,0 kbit/s | 20,4 kbit/s | 159,6 kbit/s |
| 7 | 84,0 kbit/s | 42,0 kbit/s | 23,6 kbit/s | 182,4 kbit/s |

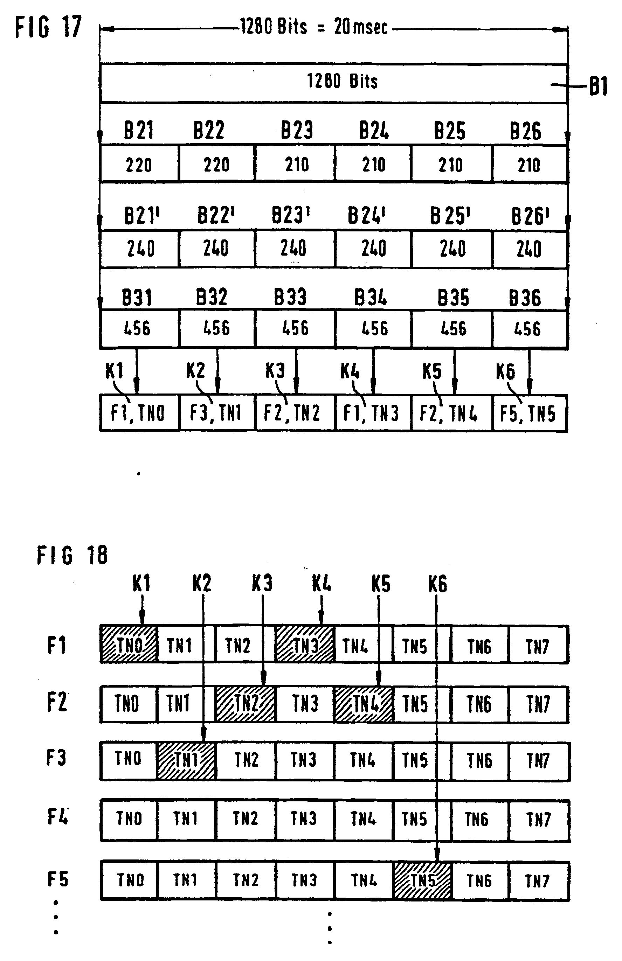

Eine sehr interessante Übertragungsrate ist 64 kbit/s. Diese Übertragungsrate läßt sich mit dem bestehenden GSM mit der Zuordnung von sechs Kanälen (Zeitschlitzen) von jeweils 12,0 kbit/s durchführen. Wie es in den Fig. 17 bis 19 dargestellt ist, wird dabei alle 20 ms von der Datenquelle DS ein Datenblock B1 von 1280 Bits geliefert. Dieser Block B1 läßt sich in sechs Blöcke B21 bis B26 zerlegen, wobei die Blöcke B21 und B22 jeweils 220 Bits enthalten und die Blöcke B23 bis B26 jeweils 210 Bits enthalten. Die Blöcke B21 bis B26 werden mit Zusatzbits erweitert, so daß Blöcke B21' bis B26' mit jeweils 240 Bits entstehen. Diese Blöcke B21' bis B26' werden der Übertragungseinrichtung einschließlich der Kanalcodier- und Interleavingeinrichtung für den 12,0 kbit/s Kanal zugeführt und man erhält die sechs Blöcke B31 bis B36 mit jeweils 456 Bits. Diese Blöcke B31 bis B36 werden den einzelnen Zeitschlitzen des aus sechs Zeitschlitzen bestehenden Multi-Kanals zugeordnet. Der Multi-Kanal kann die in Fig. 18 dargestellte Konfiguration besitzen, wobei der Multi-Kanal beispielsweise auf vier Frequenzen F1, F2, F3 und F5 verteilt ist, nämlich (F1,TN0), (F3,TN1), (F2,TN2), (F1,TN3), (F2,TN5), und (F5,TN5).

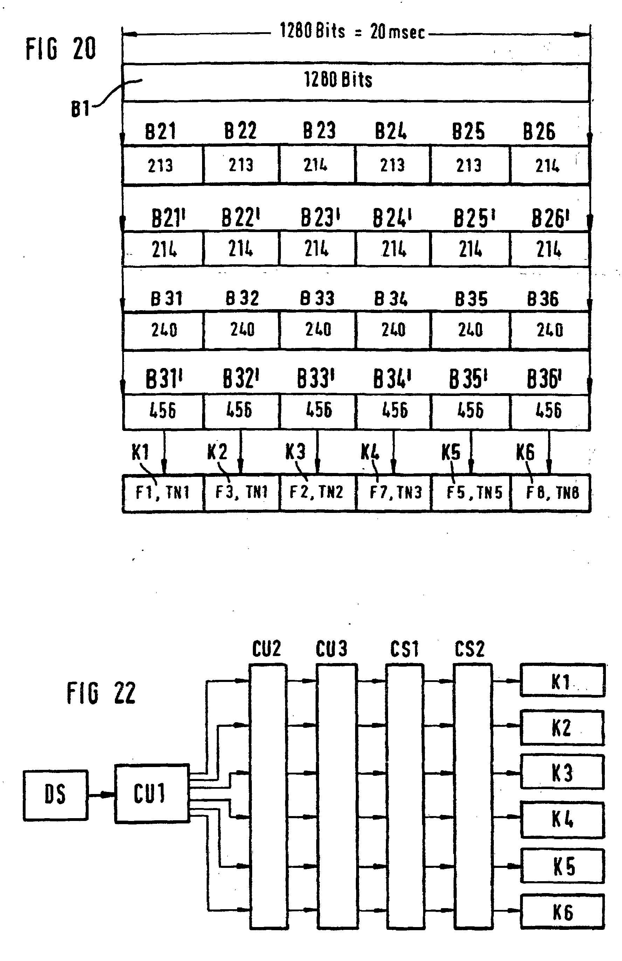

Eine zugehörige Übertragungsanordnung ist vereinfacht in Fig. 19 dargestellt. Die Datenquelle DS gibt an die Steuereinheit CU1 in jeweils 20ms einen Datenstrom von 1280 Bits ab. Die Steuereinheit CU1 bildet die Blöcke B1 und gibt diese an die Steuereinheit CU2 ab, die jeden Block B1 in die Blöcke B21 bis B26 aufteilt. Die Steuereinheit CU2 fügt die Zusatzbits hinzu und gibt die Blöcke B21' bis B26' ab, die in der Codierstufe CS kanalcodiert werden, so daß die Blöcke B31 bis B36 erhalten werden, die den Kanälen K1 bis K6 zugeordnet sind.

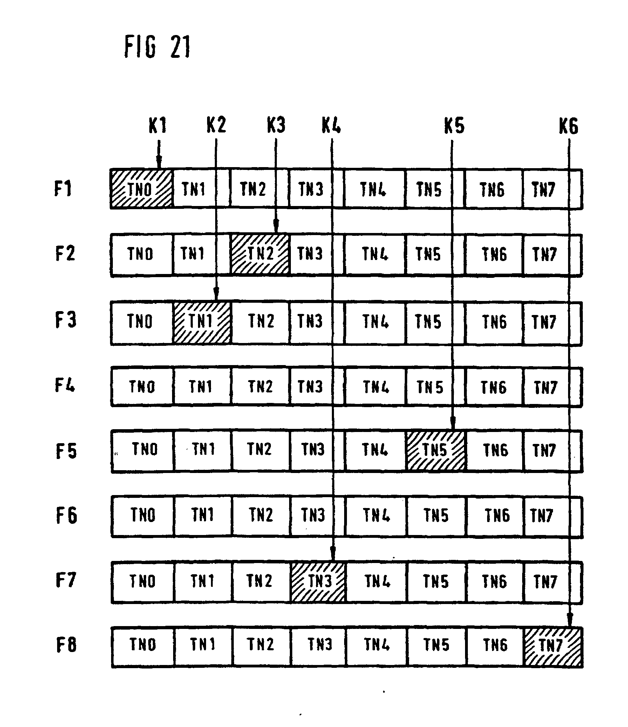

In den Fig. 20 bis 22 ist eine weitere Möglichkeit für die Übertragung von 64,0 kbit/s dargestellt. Es besteht nämlich auch die Möglichkeit die Anzahl der Zusatzbits zum größten Teil für fehlerkorrigierende Redundanz zu verwenden. Dabei teilt man einen Datenblock von 1280 Bits, den man alle 20 ms erhält, wiederum in sechs Teilblöcke B21 bis B26 auf. Die Blöcke B21, B22, B24 und B25 enthalten 213 Bits, während die Blöcke B23 und B26 jeweils 214 Bits erhalten. Die Blöcke B21, B22, B24 und B25 werden durch ein Zusatzbit ergänzt, so daß alle Blöcke 214 Bits enthalten. Danach wird jeder Block durch fehlererkennende oder fehlerkorrigierende Redundanz auf 240 Bits erweitert, um die Blöcke B31 bis B36 zu erhalten. Dann wird jeder Block B31 bis B36 unter Bildung von Blöcken B31' bis B36' einer Übertragungseinrichtung für jeweils einen 12,0 kbit/s Kanal K1 bis K6 zugeführt, wie es in Fig. 21 dargestellt ist.

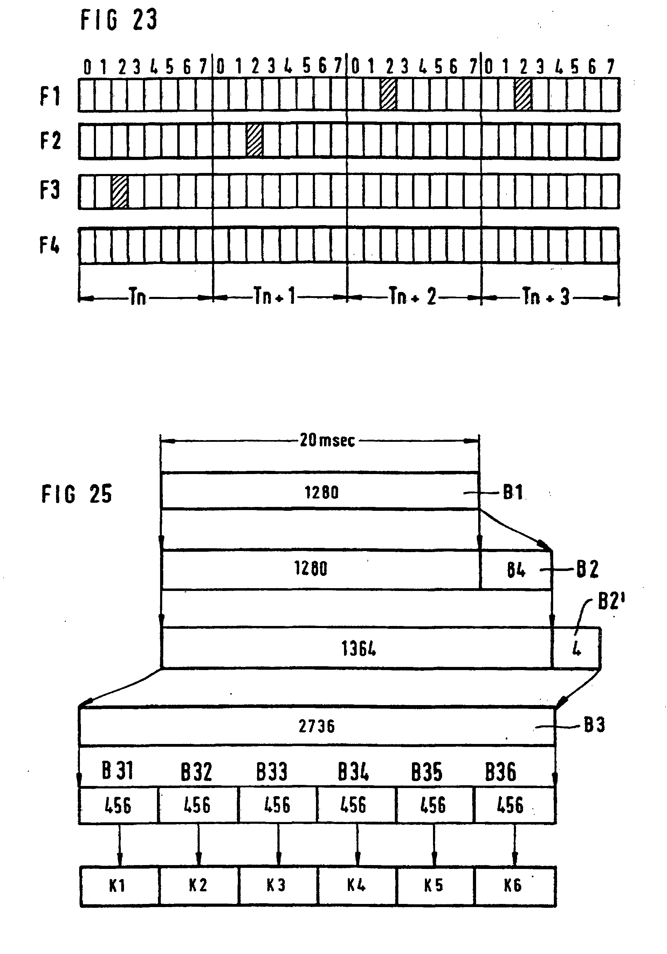

Bei der in Fig. 22 dargestellten Anordnung gibt die Datenquelle DS an die Steuereinheit CU1 in jeweils 20ms einen Datenstrom von 1280 Bits ab. Die Steuereinheit CU1 bildet die Blöcke B1 und gibt diese an die Steuereinheit CU2 ab, die jeden Block B1 in die Blöcke B21 bis B26 aufteilt. Die Steuereinheit CU2 fügt die Zusatzbits hinzu, um die Blöcke B21 'bis B26' mit gleicher Länge zu bilden. Die Codierstufe CS1 fügt die Kanalcodierung hinzu, um die Blöcke B31 bis B36 zu bilden und die Codierstufe CS2 erzeugt die Blöcke B31' bis B36' der Kanäle K1 bis K6.

Im GSM wird neben der festen Zuordnung der Kanäle, beispielsweise der Daten-, Sprach- oder Kontrollkanäle, zu einer festen Frequenz und einem Zeitschlitz TN innerhalb eines Zeitschlitzrahmens T auch das Frequenzsprungverfahren (Frequency Hopping) angewendet. Der Vorteil des Frequenzsprungverfahrens liegt darin, daß sich die Qualität, z.B. die Bitfehlerrate des Übertragungskanals, für langsam bewegende Mobilstationen MS sich gegenüber einer festen Zuordnung verbessert.

Beim Frequenzsprungverfahren kann der Kanal von einem Zeitschlitzrahmen T zu einem anderen Zeitschlitzrahmen T auf einer anderen Frequenz liegen; dabei bleibt aber die zugewiesene Zeitschlitznummer TN erhalten. Da die Frequenz sich nicht bitweise ändert, sondern nur von Zeitschlitzrahmen T zu Zeitschlitzrahmen T ändern kann, spricht man in diesem Fall von einem langsamen Frequenzsprungverfahren.

Wenn das Frequenzsprungverfahren angewendet wird, so gibt die Basis-Steuereinheit BSC vor, über welche Frequenzen und in welcher Reihenfolge nach einem Frequenzsprungalgorithmus gesprungen werden soll. In Fig. 23 ist das Frequenzsprungverfahren für einen Kanal, der dem Zeitschlitz TN2 zugeordnet ist und über vier Frequenzen springen kann, für vier hintereinanderfolgende Zeitschlitzrahmen T dargestellt. Die vier Frequenzen lauten: F1, F2, F3 und F4. Im Zeitschlitzrahmen Tn liegt der Zeitschlitz TN2 auf der Frequenz F3, im Zeitschlitzrahmen Tn+1 auf der Frequenz 2, danach auf F1 und dann wieder auf F1 usw.

Das Frequenzsprungverfahren ist auch auf Multi-Kanäle anwendbar. In den Fig. 20 bis 22 ist eine Übertragungsstrategie für eine Übertragung mit 64 kbit/s dargestellt. Die Übertragung mit 64 kbit/s wird unter Ausnutzung eines aus sechs Zeitschlitzen T gebildeten Multi-Zeitschlitzes durchgeführt. In Fig. 21 ist beispielhaft dargestellt, auf welchen Frequenzen und Zeitschlitzen der Multi-Kanal liegt. In der nachfolgenden Tabelle wird angegeben, wie eine mögliche Konstellation für vier aufeinanderfolgende Zeitschlitzrahmen

| | Zeitschlitz | Zeitschlitzrahmen n | Zeitschlitzrahmen n+1 | Zeitschlitzrahmen n+2 | Zeitschlitzrahmen n+3 |
|---|---|---|---|---|---|
| Kanal 1 | TN0 | F1 | F1 | F4 | F2 |
| Kanal 2 | TN1 | F3 | F4 | F5 | F4 |
| Kanal 3 | TN2 | F2 | F2 | F8 | F8 |
| Kanal 4 | TN3 | F7 | F2 | F8 | F6 |
| Kanal 5 | TN5 | F5 | F3 | F6 | F4 |
| Kanal 6 | TN7 | F8 | F3 | F3 | F7 |

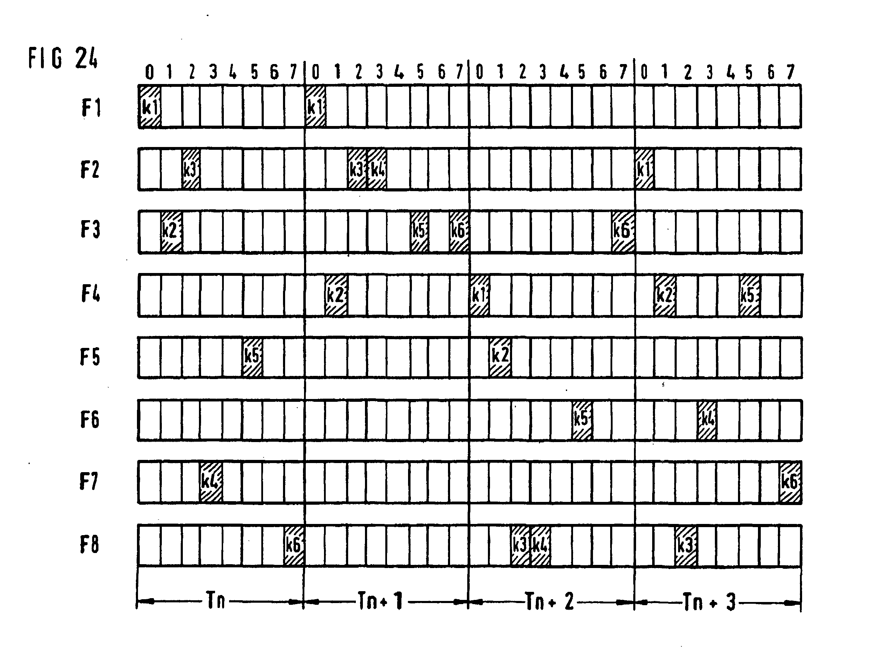

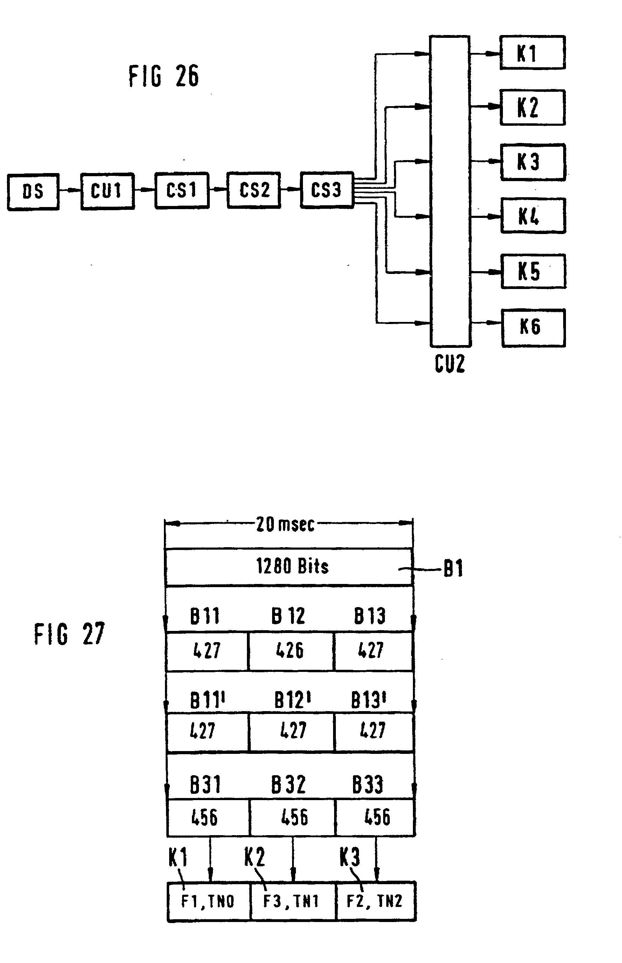

aussehen kann, wenn der aus sechs Zeitschlitzen eines Zeitschlitzrahmens gebildete Multi-Kanal über acht Frequenzen springen kann. Graphisch ist die Tabelle in Fig. 24 dargestellt. Eine weitere Möglichkeit der Übertragung ist in den Fig. 25 und 26 dargestellt. Der von der Datenquelle erhaltene Datenstrom von jeweils 1280 Bits in 20 ms wird dabei einem verketteten Kanalcodierschema (Block- und Faltungscodierung) unterworfen und anschließend auf sechs Zeitschlitze verteilt. Aus einem in der Steuereinheit CU1 erzeugten Block B1 wird durch eine Kanalcodierung in der Codierstufe CS1 ein Block B2 gebildet. Eine Codierstufe CS2 fügt Zusatzbits hinzu und bildet den Block B2'. In einer Codierstufe CS3 erfolgt eine Faltungscodierung und es wird der Block B3 gebildet. Eine Steuereinheit CU2 erzeugt daraus die Blöcke B31 bis B36, die den Kanälen K1 bis K6 zugeordnet sind.

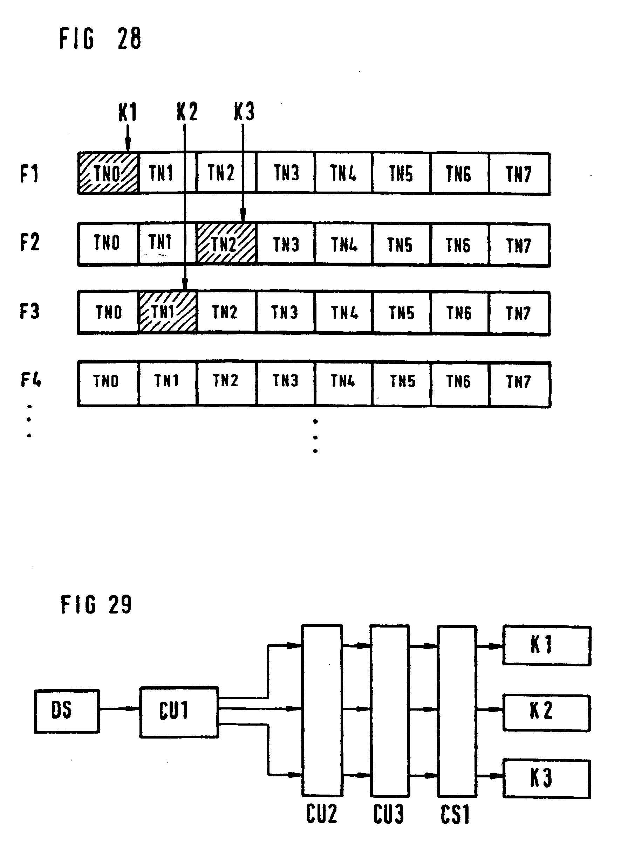

Eine andere Möglichkeit zur Übertragung von 64 kbit/sec ist in den Fig. 27 bis 33 dargestellt. Dort erfolgt eine Zuweisung von drei oder vier Zeitschlitzen. Im Falle von drei Zeitschlitzen werden, wie es in den Fig. 27 bis 29 dargestellt ist, die 1280 Bits des Blocks B1 in drei Blöcke B11, B12 und B13 zerlegt, wobei der Block B12 426 Bits enthält und die Blöcke B11 und B13 jeweils 427 Bits enthalten. Der Block B12 wird mit einem Zusatzbit erweitert. Alle drei Blöcke B11' bis B13' werden dann einer Kanalcodiereinrichtung zugeführt, welche jedem Block 29 Bits Redundanz hinzufügt, so daß jeder Block B31 bis B33 insgesamt 456 Bits enthält. Danach wird jeder Block einer Interleavereinrichtung eines Zeitschlitzes zugewiesen und in einem Zeitschlitz übertragen, wie es beispielhaft in Fig. 28 gezeigt ist.

Bei der in Fig. 29 dargestellten Übertragungsanordnung gibt die Datenquelle DS an die Steuereinheit CU1 in jeweils 20ms einen Datenstrom von 1280 Bits ab. Die Steuereinheit CU1 bildet die Blöcke B1 und gibt diese an die Steuereinheit CU2 ab, die jeden Block B1 in die Blöcke B11 bis B13 zerlegt. Die Steuereinheit CU3 fügt die Zusatzbits hinzu, um die Blöcke B11' bis B13' mit jeweils 427 Bits zu bilden. Die Codierstufe CS1 fügt die Kanalcodierung hinzu, um die Blöcke B31 bis B33 zu bilden, die die Kanäle K1 bis K3 darstellen.

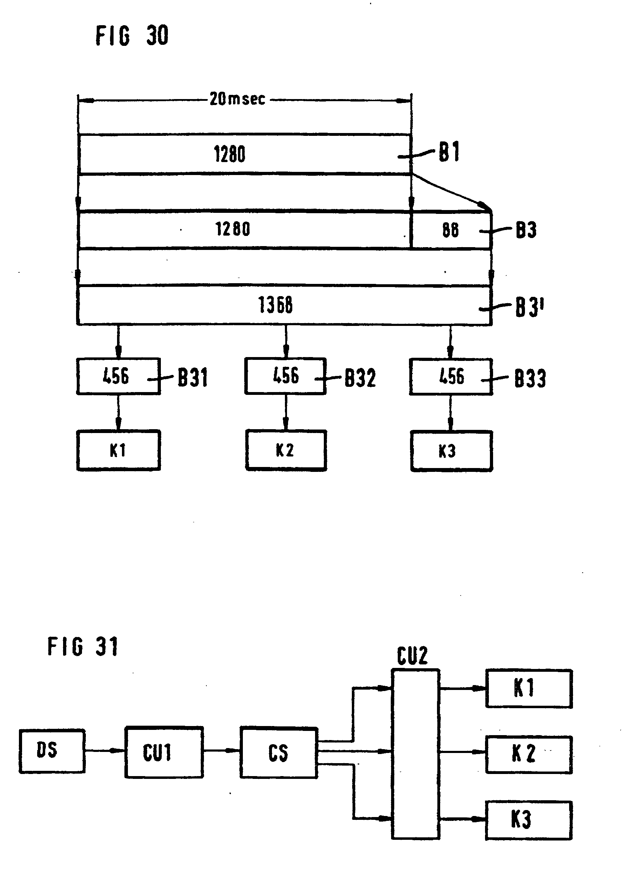

In den Fig. 30 und 31 ist dargestellt, daß man den gesamtem Datenblock B1 von 1280 Bits kanalcodiert, in Blöcke B31 bis B33 zerlegt und in drei Zeitschlitzen überträgt.

Bei der in Fig. 31 dargestellten Übertragungsanordnung bildet die Steuereinheit CU1 die Blöcke B1 und gibt diese an die Codierstufe CS1 ab, die jeden Block B1 kanalcodiert. Eine Steuereinheit CU2 erzeugt die Blöcke B31 bis B33, die die Kanäle K1 bis K3 darstellen.

Im Falle von vier Zeitschlitzen werden die 1280 Bits in vier Blöcke von je 320 Bits zerlegt. Durch die Kanalcodierung werden jedem Block 136 Bits Redundanz hinzugefügt und jeder Block hat dann 456 Bits. Danach wird dann jeder Block bestehend aus 456 Bits einem Zeitschlitz zugeordnet und übertragen.

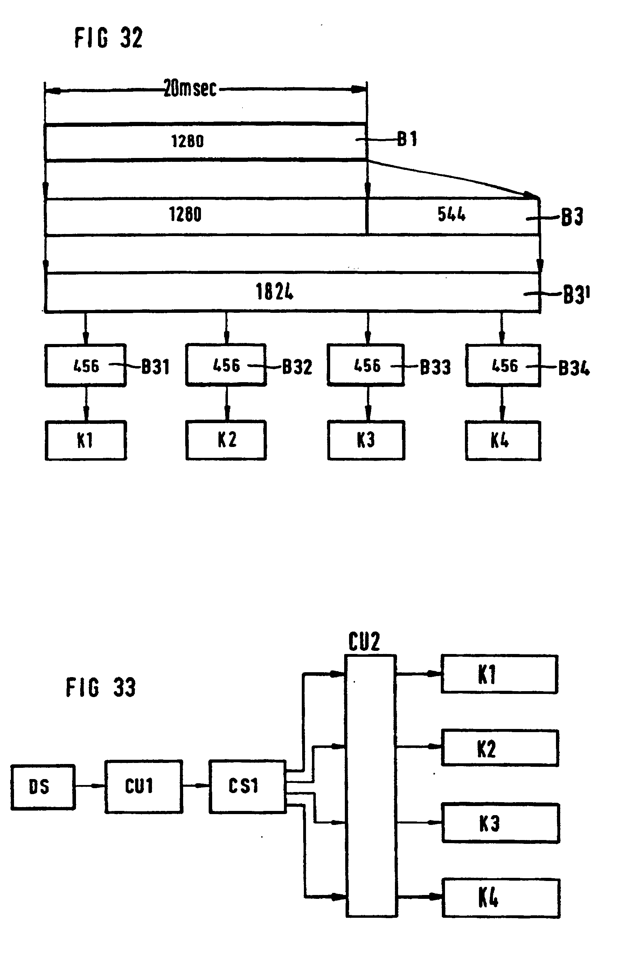

In den Fig. 32 und 33 ist dargestellt, daß man den gesamtem Datenblock von 1280 Bits kanalcodiert und auf diese Weise den Block B3 erzeugt. Dieser wird in vier Blöcke B31 bis B34 zerlegt und auf vier Zeitschlitze aufteilt.

Bei der in Fig. 33 dargestellten Übertragungsanordnung gibt die Datenquelle DS wiederum an die Steuereinheit CU1 in jeweils 20ms einen Datenstrom von 1280 Bits ab. Die Steuereinheit CU1 bildet die Blöcke B1 und gibt diese an die Codierstufe CS1 ab, die jeden Block B1 unter Hinzufügen von 544 Bits kanalcodiert. Der codierte Block B3' wird dann in der Codierstufe CS2 in die Blöcke B31 bis B33 zerlegt, die den Kanälen K1 bis K3 zugeordnet sind.

Weitere Aufteilungen können durchgeführt werden, um einen Datenstrom in einem aus mehreren Kanälen gebildeten Multi-Kanal zu übertragen. In jedem Fall ist es möglich, eine an den jeweiligen Anwendungsfall angepaßte Codierung und Aufteilung zu erhalten. In den vorliegenden Ausführungsbeispielen wurde den Kanälen eines Multi-Kanals jeweils Zeitschlitze eines Zeitmultiplexsystems zugeordnet, die als logische Kanäle anzusehen sind. Es ist jedoch auch möglich, andere logische oder physikalische Kanäle, wie beispielsweise Frequenzen für die Bildung von Multi-Kanälen zu benutzen.

Bei der Übertragung eines fehlergesicherten 64 kbit/s Datenkanals unter Ausnutzung des im GSM existierenden fehlergesicherten 12 kbit/s Datenkanals kann ein Multi-Zeitschlitz MTN, bestehend aus sechs Zeitschlitzen TN eines Zeitschlitzrahmens TF, benutzt werden. Um die Daten des 64 kbit/s Kanals an das Format des 12 kbit/s Datenkanals (240 Bit pro 20 msec) anzupassen, wurden, wie in den Fig. 17 bis 20 und 20 bis 22 dargestellt, Redundanzbits zur Fehlererkennung oder Fehlerkorrektor und/oder Füllbits hinzugefügt.

Durch das Sammeln der Daten über einen längeren Zeitraum, z.B. über ein Vielfaches von 20 msec, beispielsweise 40 msec oder 60 msec, besteht die Möglichkeit, die Anzahl der benötigten Zeitschlitze T unter Ausnutzung der 12 kbit/s Datenkanäle für eine 64 kbit/s Übertragung zu reduzieren. Die Reduzierung kann dadurch bewerkstelligt werden, indem man Multi-Kanäle bzw. Multi-Zeitschlitze bildet, die sich über mehrere Zeitschlitzrahmen (Multi-Zeitschlitzrahmen) erstrecken.

Die bei der Verteilung der Daten über mehrere Zeitschlitzrahmen frei gewordenen Zeitschlitze innerhalb eines Multi-Zeitschlitzrahmens kann man für andere Teilnehmer benutzen oder in den frei gewordenen Zeitschlitzen einen zum 64 kbit/s Datendienst zusätzlichen Daten- oder Sprachdienst für denselben Mobilfunkteilnehmer anbieten.

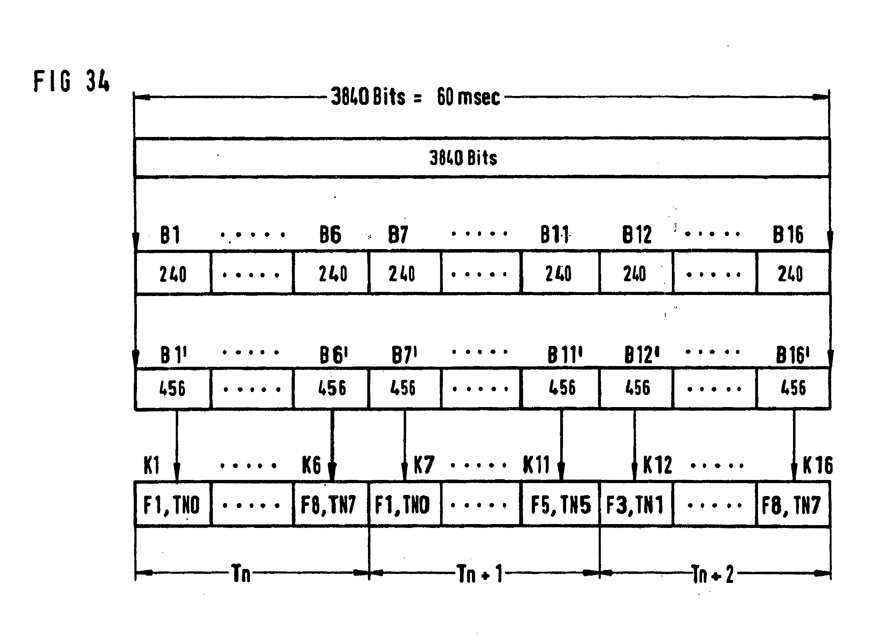

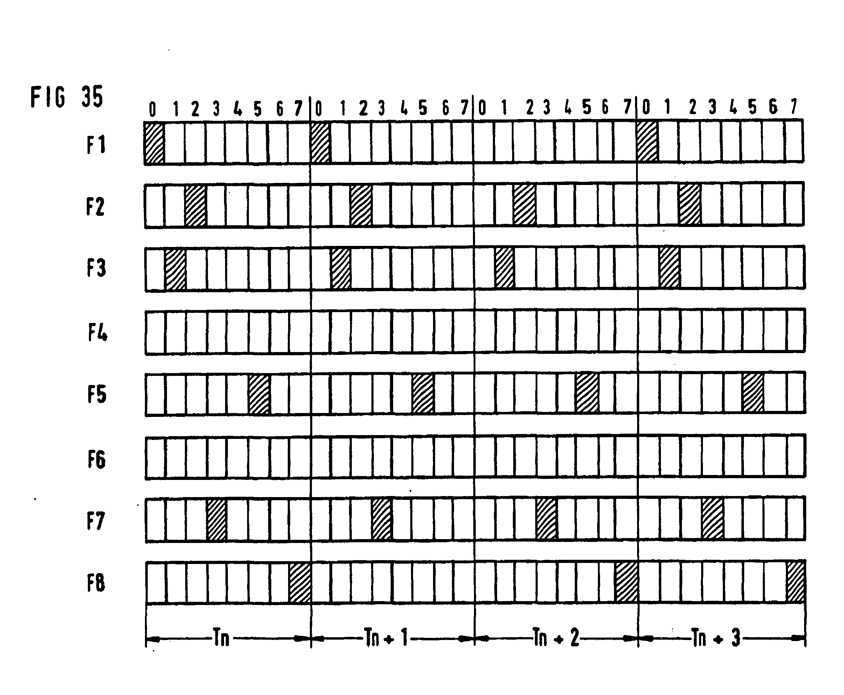

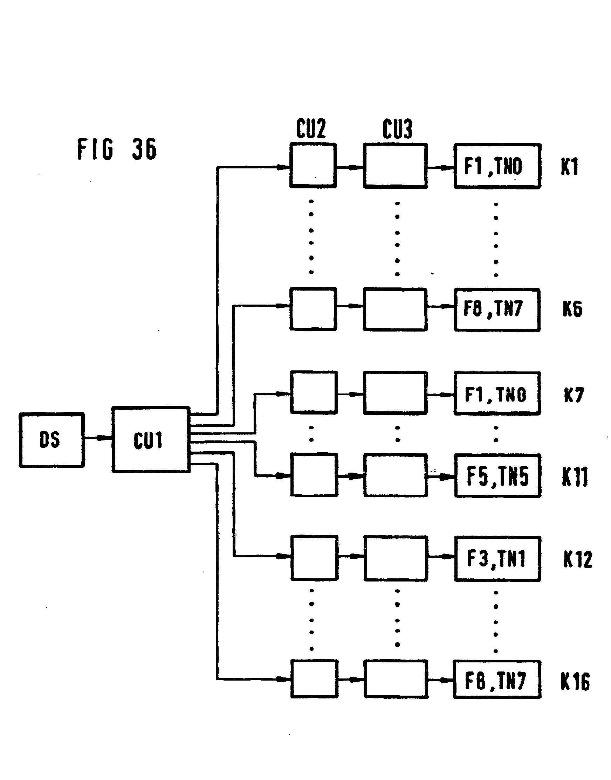

In den Fig. 34 bis 36 ist dargestellt, wie 64 kbit/s übertragen werden können unter Ausnutzung des bereits existierenden 12 kbit/s Datenkanals ohne zusätzliche Füllbits bzw. Redundanzbits. Dabei teilt man einen Datenblock von 3840 Bits, den man alle 60 msec erhält, in 16 Teilblöcke B. Die Teilblöcke B1 bis B16 enthalten jeweils 240 Bits. Danach wird jeder Teilblock B einer Übertragungseinrichtung für jeweils einen 12 kbit/s Kanal K1 bis K16 zugeführt. Dabei werden den ersten sechs Kanälen K1 bis K16 Zeitschlitze im Zeitschlitzrahmen Tn, den Kanälen K7 bis K11 Zeitschlitze im darauf folgenden Zeitschlitzrahmen Tn+1 und den letzten fünf Kanälen K12 bis K16 Zeitschlitze im Zeitschlitzrahmen Tn+2 zugewiesen. Bei dieser Übertragungsmethode für eine 64 kbit/s Übertragung wurde ausgenutzt, daß das kleinste gemeinsame Vielfache von 64 und 12 gleich 192 ist, da 3 • 64 = 16 • 12 ist.

## Patentansprüche

1. Verfahren zum Übertragen von digitalen Informationen in einem digitalen Funksystem, bei dem die digitalen Informationen auf der Sendeseite blockweise codiert werden, bei dem die Blöcke in Kanälen übertragen werden und bei dem die Informationen auf der Empfangsseite anschließend wieder aus den übertragenen Blöcken zurückgewonnen werden,
**dadurch gekennzeichnet,**
**daß** auf der Sendeseite jeder Block (B1) in eine Mehrzahl von weiteren Blöcken (B2, B3) aufgeteilt wird, daß jeder weitere Block (B21, B22) in einem Kanal (K) eines aus einer Mehrzahl von Kanälen (K) zusammengesetzten Multi-Kanals über das digitale Funksystem übertragen wird und
**daß** auf der Empfangsseite die in den Kanälen übertragenen weiteren Blöcke (B21, B22) wieder zusammengefaßt und ausgegeben werden.

2. Verfahren nach Anspruch 1,
**dadurch gekennzeichnet,**
**daß** als Kanäle (K) Zeitschlitze (TN) eines Zeitschlitzrahmens (T) eines Zeitmultiplexsystems vorgesehen sind.

3. Verfahren nach einem der vorangehenden Ansprüche,
**dadurch gekennzeichnet,**
**daß** die die Multi-Kanäle bildenden Kanäle (K) jeweils die gleiche Struktur aufweisen.

4. Verfahren nach Anspruch 3,
**dadurch gekennzeichnet,**
**daß** die Kanäle (K) jeweils eine Trainingssequenz (TSC), Kontrollbits (KB), Zusatzbits (TB) und eine Schutzzeit (GP) aufweisen.

5. Verfahren nach einem der vorangehenden Ansprüche,
**dadurch gekennzeichnet,**
**daß** die jeweils einen Multi-Kanal bildenden Kanäle (K) auf einer Frequenz (F) liegen.

6. Verfahren nach einem der Ansprüche 1 bis 4,
**dadurch gekennzeichnet,**
**daß** die jeweils einen Multi-Kanal bildenden Kanäle (K) auf unterschiedlichen Frequenzen (F) liegen.

7. Verfahren nach einem der Ansprüche 1 bis 4,
**dadurch gekennzeichnet,**
**daß** die jeweils einen Multi-Kanal bildenden Kanäle (K) teilweise auf der selben Frequenz (F) und teilweise auf unterschiedlichen Frequenzen (F) liegen.

8. Verfahren nach einem der vorangehenden Ansprüche,
**dadurch gekennzeichnet,**
**daß** die auf dem Multi-Kanal zu übertragenden Informationen durch Hinzufügen von Redundanz gegen Störungen auf dem Übertragungskanal geschützt werden.

9. Verfahren nach einem der Ansprüche 4 bis 8,
**dadurch gekennzeichnet,**
**daß** jedem als Kanal (K) des Multi-Kanals dienenden Zeitschlitz ein eigenständiger Kanal (K) zugeordnet wird, wobei die Informationen in Teilblöcke zerlegt werden, durch Zusatzbits (Z) aufgefüllt werden und kanalcodiert werden.

10. Verfahren nach einem der Ansprüche 4 bis 9,
**dadurch gekennzeichnet,**
**daß** jedem als Kanal (K) des Multi-Kanals dienenden Zeitschlitz ein eigenständiger Kanal (K) zugeordnet wird, welcher einem Zeitschlitz eines Multi-Zeitschlitzes zugeordnet ist, wobei die Informationen in Teilblöcke zerlegt werden, durch Redundanz für Fehlererkennung oder Fehlerkorrektur ergänzt werden und kanalcodiert werden.

11. Verfahren nach einem der Ansprüche 4 bis 10,
**dadurch gekennzeichnet,**
**daß** die zu übertragenden Informationen blockweise gesammelt werden, kanalcodiert werden, in Teilblöcke zerlegt werden und den als Kanäle (K) dienenden Zeitschlitzen eines Multi-Kanals zugeordnet werden.

12. Verfahren nach einem der vorangehenden Ansprüche,
**dadurch gekennzeichnet,**
**daß** die zu übertragenden kanalcodierten Informationen verschachtelt, (interleaved), in Teilblöcke zerlegt und unabhängig voneinander übertragen werden.

13. Verfahren nach einem der Ansprüche 4 bis 12,
**dadurch gekennzeichnet,**
**daß** die Kanäle (K) nach jedem Zeitschlitzrahmen (T) auf einer anderen Frequenz (F) liegen.

14. Verfahren nach Anspruch 13,
**dadurch gekennzeichnet,**
**daß** die Kanäle (K) nach jedem Zeitschlitzrahmen (T) nach einem vorgegebenen Algorithmus mit vorgegebenen Startbedingungen auf einer anderen Frequenz (F) liegen.

15. Verfahren nach einem der vorangehenden Ansprüche,
**dadurch gekennzeichnet,**
**daß** bei einer Übertragung ein Vielfaches von Rahmen erzeugt wird, daß der Rahmen in Teilblöcke zerlegt wird, daß jeder Teilblock einem Kanal (K) zugeführt wird, wobei jeder Kanal (K) einen Zeitschlitz (TN) belegt, daß aus diesen Zeitschlitzen (TN) ein Multikanal gebildet wird und daß dieser Multikanal über mehrere Zeitschlitze (TN) aufgeteilt wird.

16. Anordnung zum Übertragen von digitalen Informationen in einem digitalen Funksystem, umfassend
Mittel zum blockweisen Codieren der digitalen Informationen auf der Sendeseite, Mittel zum Übertragen der Blöcke in Kanälen und Mittel zum anschließenden Wiederzurückgewinnen der Informationen aus den übertragenen Blöcken auf der Empfangsseite,
**dadurch gekennzeichnet,**
**daß** auf der Sendeseite Einrichtungen (CU, CS) vorhanden sind, die jeden Block (B1) in eine Mehrzahl von weiteren Blöcken (B21, B22) aufteilen und jeden weiteren Block (B21, B22) einem Kanal (K) eines aus einer Mehrzahl von Kanälen (K) zusammengesetzten Multi-Kanals zuordnen.

17. Mobilstation zum Übertragen von digitalen Informationen in einem digitalen Funksystem, umfassend
Mittel zum blockweisen Codieren der digitalen Informationen auf der Sendeseite, Mittel zum Übertragen der Blöcke in Kanälen und Mittel zum anschließenden Wiederzurückgewinnen der Informationen aus den übertragenen Blöcken auf der Empfangsseite,
**dadurch gekennzeichnet,**
**daß** in der Mobilstation (MS) Einrichtungen (CU, CS) vorhanden sind, die jeden Block (B1) in eine Mehrzahl von weiteren Blöcken (B21, B22) aufteilen und jeden weiteren Block (B21, B22) einem Kanal (K) eines aus einer Mehrzahl von Kanälen (K) zusammengesetzten Multi-Kanals zuordnen.

## Claims

1. Method for transmitting digital information in a digital radio system, wherein the digital information is block-coded on the transmission side, wherein the blocks are transmitted in channels, and wherein the information is then recovered from the transmitted blocks on the receiving side,
**characterised in that**
on the transmission side each block (B1) is divided into a plurality of further blocks (B2, B3), each further block (B21, B22) is transmitted in a channel (K) of a multichannel composed of a plurality of channels (K) via the digital radio system and that on the receiving side the further blocks (B21, B22) transmitted in the channels are again combined and output.

2. Method according to claim 1,
**characterised in that**
time slots (TN) of a time slot frame (T) of a time division multiplex system are provided as channels (K).

3. Method according to one of the preceding claims,
**characterised in that**
the channels (K) forming the multichannels each have the same structure.

4. Method according to claim 3,
**characterised in that**
the channels (K) each comprise a training sequence (TSC), control bits (KB), additional bits (TB) and a guard period (GP).

5. Method according to one of the preceding claims,
**characterised in that**
the channels (K) forming one multichannel are all at one frequency (F).

6. Method according to one of claims 1 to 4,
**characterised in that**
the channels (K) forming one multichannel are all at different frequencies (F).

7. Method according to one of claims 1 to 4,
**characterised in that**
some of the channels (K) forming one multichannel are at the same frequency (F) and some are at different frequencies (F).

8. Method according to one of the preceding claims,
**characterised in that**
the information to be transmitted on the multichannel is protected against interference on the transmission channel by adding redundancy.

9. Method according to one of claims 4 to 8,
**characterised in that**
a separate channel (K) is assigned to each time slot serving as a channel (K) of the multichannel, with the information being broken down into sub-blocks, supplemented by additional bits (Z) and channel-coded.

10. Method according to one of claims 4 to 9,
**characterised in that**
a separate channel (K) is assigned to each time slot serving as a channel (K) of the multichannel, said separate channel (K) being assigned to a time slot of a multi-time slot, with the information being broken down into sub-blocks, supplemented by redundancy for error detection or error correction and channel-coded.

11. Method according to one of claims 4 to 10,
**characterised in that**
the information to be transmitted is collected in blocks, channel-coded, broken down into sub-blocks and assigned to the time slots of a multichannel serving as channels (K).

12. Method according to one of the preceding claims,
**characterised in that**
the channel-coded information to be transmitted is interleaved, broken down into sub-blocks and transmitted independently of each other.

13. Method according to one of claims 4 to 12,
**characterised in that**
after each time slot frame (T) the channels (K) are at a different frequency (F).

14. Method according claim 13,
**characterised in that**
after each time slot frame (T) the channels (K) are at a different frequency (F) according to a predefined algorithm with predefined start conditions.

15. Method according to one of the preceding claims,
**characterised in that**
during a transmission a multiple of frames is generated, the frame is broken down into sub-blocks, each sub-block is assigned to a channel (K), with each channel (K) occupying a time slot (TN), a multichannel is created from said time slots (TN) and said multichannel is divided over a plurality of time slots (TN).

16. Arrangement for transmitting digital information in a digital radio system, comprising
means for block-coding digital information on the transmission side, means for transmitting the blocks in channels and means for then recovering the information from the transmitted blocks on the receiving side,
**characterised in that**
devices (CU, CS) are available on the transmission side, which divide each block (B1) into a plurality of further blocks (B21, B22) and assign each further block (B21, B22) to a channel (K) of a multichannel composed of a plurality of channels (K).

17. Mobile station for transmitting digital information in a digital radio system, comprising
means for block-coding digital information on the transmission side, means for transmitting the blocks in channels and means for then recovering the information from the transmitted blocks on the receiving side,
**characterised in that**
devices (CU, CS) are available in the mobile station (MS) which divide each block (B1) into a plurality of further blocks (B21, B22) and assign each further block (B21, B22) to a channel (K) of a multichannel composed of a plurality of channels (K).

## Revendications

1. Procédé de transmission d'informations numériques au sein d'un système de radiocommunication numérique, dans lequel les informations numériques sont codées par blocs côté émission, dans lequel les blocs sont transmis dans des canaux et dans lequel les informations sont ensuite à nouveau récupérées côté réception à partir des blocs transmis, **caractérisé en ce que** du côté émission, chaque bloc (B1) est réparti en une pluralité d'autres blocs (B2, B3), **en ce que** chaque bloc (B21, B22) supplémentaire est transmis par l'intermédiaire du système de radiocommunication numérique, dans un canal (K) d'un canal multiple constitué d'une pluralité de canaux (K) et **en ce que** du côté réception, les autres blocs (B21, B22) transmis dans les canaux sont à nouveau regroupés et édités.

2. Procédé selon la revendication 1, **caractérisé en ce que** des créneaux temporels (TN) d'une trame de créneaux temporels (T) d'un système de multiplexage temporel sont prévus en tant que canaux (K).

3. Procédé selon l'une quelconque des revendications précédentes,
**caractérisé en ce que** chacun des canaux (K) formant les canaux multiples présente une structure identique.

4. Procédé selon la revendication 3, **caractérisé en ce que** les canaux (K) présentent chacun une séquence de conditionnement (TSC), des bits de contrôle (KB), des bits supplémentaires (TB) et une période de garde (GP).

5. Procédé selon l'une quelconque des revendications précédentes,
**caractérisé en ce que** les canaux (K), formant respectivement un canal multiple se situent sur une fréquence (F).

6. Procédé selon l'une quelconque des revendications 1 à 4, **caractérisé en ce que** les canaux (K), formant respectivement un canal multiple se situent sur différentes fréquences (F).

7. Procédé selon l'une quelconque des revendications 1 à 4, **caractérisé en ce que** les canaux (K), formant respectivement un canal multiple se situent partiellement sur une même fréquence (F) et partiellement sur des fréquences différentes (F).

8. Procédé selon l'une quelconque des revendications précédentes,
**caractérisé en ce que** les informations devant être transmises sur un canal multiple sont protégées par ajout de redondance contre les perturbations sur le canal de transmission.

9. Procédé selon l'une quelconque des revendications 4 à 8, **caractérisé en ce qu'**un canal à part entière (K) est attribué à chacun des créneaux temporels faisant office de canal (K) d'un canal multiple, les informations étant démontées en blocs partiels, remplies par des bits supplémentaires (Z) et soumises à un codage canal.

10. Procédé selon l'une quelconque des revendications 4 à 9, **caractérisé en ce qu'**un canal à part entière (K) qui est attribué à un créneau temporel d'un créneau temporel multiple est attribué à chacun des créneaux temporels faisant office de canal (K) d'un canal multiple, les informations étant démontées en blocs partiels, complétées par de la redondance pour la détection des erreurs ou la correction des erreurs et soumises à un codage canal.

11. Procédé selon l'une quelconque des revendications 4 à 10, **caractérisé en ce que** les informations à transmettre sont collectées par blocs, soumises à un codage canal, démontées en blocs partiels et attribuées aux créneaux temporels d'un canal multiple faisant office de canaux (K).

12. Procédé selon l'une quelconque des revendications précédentes,
**caractérisé en ce que** les informations à transmettre préalablement soumises à un codage canal sont entrelacées, (interleaved), démontées en blocs partiels, et transmises indépendamment les unes des autres.

13. Procédé selon l'une quelconque des revendications 4 à 12, **caractérisé en ce qu'**après chaque trame de créneaux temporels (T), les canaux se situent sur une autre fréquence (F).

14. Procédé selon la revendication 13, **caractérisé en ce qu'**après chaque trame de créneaux temporels (T), les canaux (K) se situent sur une autre fréquence (F), selon un algorithme prédéfini, avec des conditions de démarrage prédéfinies.

15. Procédé selon l'une quelconque des revendications précédentes,
**caractérisé en ce que** lors d'une transmission, un multiple de trames est généré, **en ce que** la trame est démontée en blocs partiels, **en ce que** chaque bloc partiel est amené à un canal (K), chaque canal (K) occupant un créneau temporel (TN), **en ce qu'**un canal multiple est formé à partir de ces créneaux temporels (TN) et **en ce que** ce canal multiple est réparti sur plusieurs créneaux temporels (TN).

16. Configuration pour la transmission d'informations numériques au sein d'un système de radiocommunication mobile, comprenant des moyens pour le codage par blocs des informations numériques du côté émission, des moyens pour la transmission des blocs dans des canaux et des moyens pour la récupération consécutive des informations du côté réception, à partir des blocs transmis, **caractérisée en ce que** du côté émission, des systèmes (CU, CS) sont présents et répartissent chaque bloc (B1) en une pluralité d'autres blocs (B21, B22) et attribuent chaque autre bloc (B21, B22) à un canal (K) d'un canal multiple composé d'une pluralité de canaux (K).

17. Poste mobile pour la transmission d'informations numériques au sein d'un système de radiocommunication numérique, comprenant des moyens pour le codage par blocs des informations numériques du côté émission, des moyens pour la transmission des blocs dans des canaux et des moyens pour la récupération consécutive des informations du côté réception, à partir des blocs transmis, **caractérisé en ce que** dans la station mobile (MS), des systèmes (CU, CS) sont présents, et répartissent chaque bloc (B1) en une pluralité d'autres blocs (B21, B22) et attribuent chaque autre bloc (B21, B22) à un canal (K) d'un canal multiple composé d'une pluralité de canaux (K).
